# EUROPEAN PATENT APPLICATION

(11) **EP 2 255 607 A1**
(43) Date of publication of application: **01.12.2010**
(21) Application number: 09161540.1
(22) Date of filing: 29.05.2009
(51) Int. Cl.: A01B 45/04, A01G 1/00

(54) **Device for laying web material on a surface or removing it from a surface**

(71) Applicant: Uniek Graszodenkwekerij, 4726 BW Heerle (NL)
(72) Inventor: Rockx, Johannes Cornelis Gerardus, 4726 BW Heerle (NL)
(74) Representative: Volmer, Johannes Cornelis

(57) **Abstract**

The invention relates to a device (10) for laying web material on a surface from a roll (40) of coiled web material, in particular for laying sod on the ground from a sod roll. The device (10) comprises a mobile main frame (12), at least a carrying subframe (26) mounted on the main frame (12), wherein the carrying subframe (26) is provided with carrying means (34) for carrying a roll of coiled web material allowing rotation of the roll about its longitudinal axis, a conveyor means (70, 72) for conveying a section of the web material during unwinding thereof from a first contacting position to a second discharging position or vice versa, at least a drive means (22, 76) for moving the mobile frame on the surface and for driving the conveyor means, and a pressure exerting element (50) for exerting a pressure on the coiled web material during unwinding or winding.

## Description

The present invention relates to a device for laying web material on a surface, starting from coiled web material, such as a sod laying device for laying natural sod or artificial turf, or for removing such web material from a surface.

At present relatively tall devices for laying wide sod webs having a width of 120 centimetres (a standard size) or more are known. These devices are used for covering large areas such as football pitches, other types of sporting fields, parks and the like. These devices are not suitable for laying web material in small areas like back gardens which are difficult to access due to small entrances such as gates, alleys between houses and the like. In addition to their size, particularly their width as such, these known devices are not manoeuvrable as desired in small gardens. Therefore at present small areas are still covered manually, which is laborious and presents a health risk, especially to the back and spine, due to the heavy weight of the sod rolls, despite their small size is only 40 centimetres wide and a strip length of a few metres.

These problems have been recognized in the art and various solutions are described e.g. in US-A-5,307,880, US-B1-6,179,060 and GB-A-2 272 623.

In laying sod webs from a sod roll by a device it is difficult to eliminate the occurrence of irregularities in the strips as laid despite thorough equalizing or levelling the ground prior to the laying operation. These irregularities may be caused by variations in the properties of the sod rolls, such as moisture, thickness, density, origin, oval shaped coils which due to this shape tend to unwind irregularly and the like. Thus the quality of sod webs as laid leaves something to be desired. Careful repositioning is a remedy, but increases the total laying time and thus costs.

An object of the present invention is to eliminate one or more of the problems discussed above, at least to reduce the seriousness of the problems, or to provide an alternative to existing devices.

More particularly, an object of the present invention is to provide a device for laying web material on the ground improving the quality of the web material as laid, in particular the uniformity in strip properties as laid

Yet another object is to provide a compact device allowing the use in poorly accessible situations, like back gardens of terraced houses.

A further object of the invention is to provide a stable device allowing the use on uneven surfaces, e.g. on sloping and/or hilly terrains.

According to the invention a device for laying a material web on a surface from a roll of coiled web material, in particular for laying sod on the ground from a sod roll, comprises a mobile main frame, at least a carrying subframe mounted on the main frame, wherein the carrying subframe is provided with carrying means for carrying a roll of coiled web material allowing rotation of the roll about its longitudinal axis, a conveyor means for conveying a section of the web material during unwinding thereof from a first contacting position to a second discharging position or vice versa, at least a drive means for moving the mobile frame on the surface and for driving the conveyor means, and a pressure exerting element for exerting a pressure on the coiled web material during unwinding or winding.

The device for laying a material web on a surface from a coiled web material according to the invention comprises a mobile main frame, which is driven by a driving means. Preferably the device is provided with wheels, which in top view are situated within the base of the main frame. As a result the width of the device can be kept relatively small, mainly in the same order of magnitude as the width of the web material, e.g. about 70-100 centimetres for a 60 centimetres wide web. Such a preferred compact device according to the invention can pass small entrances and can be used in small gardens.

A carrying frame is mounted on the main frame. This carrying frame is provided with a carrying means for carrying a roll of winded strip material. In use the roll is carried by the carrying means in such a way that the roll can freely rotate about its longitudinal axis to allow winding or unwinding. For this purpose, a shaft may be centred in the core of the coiled web material, the shaft ends being carried by the carrying means. A conveyor means, preferably an endless conveyor belt having an open carrying surface, is arranged in the main frame below the carrying frame and driven by a suitable driving means. The conveyor means essentially supports the material web starting at a first contacting position where the unwinding web section contacts the conveyor for the first time, all the way down to the discharge position of the conveyor means, preferably just above the surface, where the material web is laid on the surface. The circumference of the unwinding roll contacts the web section on the conveyor means. In use the conveyor means forwards the web to its discharge position and due to the friction between the upper side of the web section on the conveyor and the outer circumference of the roll the web is unwinded continuously essentially without a tension force directly applied to material web on the roll. Thus breaking or tearing of the material web is prevented. As the main components defining the weight of the device like the conveyor means and the drive means can be situated approximately at the bottom side the device according to the invention has a well-balanced stability thereby allowing its use on uneven surfaces.

In order to further improve the uniformity of the laid web material the device is provided with a pressure exerting element. This element applies a predetermined frictional force (drag) on the roll thereby slowing down the movement of the web during unwinding or winding. Variations in properties are counteracted and do not affect the laying process. Also the effect of a somewhat non-circular shape of coiled web material is eliminated. Thereby the occurrence of Irregularities like bulges, bumps or not-uniformly tensioned areas in the material strip as laid are prevented in an efficient manner. Thus the quality of the final product is highly uniform.

As will be apparent the device can also be used for winding a strip of material from a surface into a roll by reversing the movement directions of the mobile frame and conveyor means respectively. Hereinafter, the invention will be described mainly referring to laying a material web, but removal is equally contemplated.

The device according to the invention can be used indoor and outdoor for laying all kinds of web material, like natural sod (turf), artificial turf, floorcloth like linoleum and other types of floor covering. Advantageously, the device is used for laying natural sod because this type of material benefits the most of the favourable features of the device.

Here it is noted that US-A-4,084,763 has disclosed a self-propelled machine for laying or removing strips of artificial turf or the like, wherein a power driven drive roll is provided to frictionally engage the periphery of the roll of turf for the purpose of winding the same thereon. An adjustable friction brake may be present to apply a drag of a desired amount against the drive roll. However due to the position of the drive roll at the top of the device, the stability of the device is low, in particular for rolls having a small width e.g. 60 centimetres. Furthermore, the artificial turf strip is unsupported between the coil and the surface, thereby allowing irregularities as previously described to occur.

In a preferred embodiment the pressure exerting element comprises a braking subframe having a braking plate for contacting the circumference of the roll, which braking subframe is hingedly mounted on the main frame. The braking plate contacts a part of the circumference of the roll, preferably over the full width of the roll. The position of the braking plate is adjusted to the diminishing radius by rotation of the braking subframe about its hinge axis. Preferably the pressure exerting element is hingedly connected to the main frame by a piston cylinder assembly. This arrangement allows applying a certain amount of drag on the roll, which is maintained - at least within a predetermined range - during unwinding. Advantageously the braking plate has a curved shape contacting a part of the coiled web material in order to have a frictional area with said part instead of a line of contact.

In a preferred embodiment the carrying subframe is hingedly mounted to the main frame in order to allow maintaining contact between the unwinding roll and the web section conveyed by the conveyor means during use. Usually the weights of the carrying subframe, pressure exerting element and the web material itself will be sufficient to maintain this contact. Advantageously the carrying subframe comprises carrying arms with lifting means for lifting and lowering the carrying arms with respect to the main frame. The lifting means, preferably one or more piston cylinder assemblies, increases the user-friendliness during loading of a roll in the device.

In order to adjust the carrying position of the roll with respect to the conveyor the carrying subframe has carrying arms extendable in the longitudinal direction of the device.

In view of compactness and manoeuvrability, preferably the conveyor means comprises a first conveyor mounted in the main frame and a second conveyor mounted in a secondary conveyor frame hingedly connected to the main frame at the end of the first conveyor. The secondary conveyor frame can be rotated in an upward direction about its hinge axis, thereby allowing adjusting the distance of the discharge position with respect to the surface, which is beneficial in uneven terrains. Rotation also reduces the length of the device and accordingly the compactness and manoeuvrability are improved. More preferably the first and second conveyors have a common drive means.

In a particularly preferred embodiment the conveyor means and the mobile frame have independently controllable drive means. Then the device is capable to adjust the movement of the device over the surface and the speed of the conveyor means independently of each other. For example, if the linear speed of the conveyor means is higher than the linear speed of the device a somewhat lengthwise compressed strip as laid is achieved with respect to the web material as originally present on the roll. If the linear speed of the device is higher than that of the conveyor means the strip as laid will be stretched to some extent.

A further aspect of the invention relates to a method of laying web material on a surface, in particular using a device according to any one of the preceding claims, wherein the speed of the conveyor means is set independently from the speed of the device.

The invention will be illustrated in more detail by reference to the attached drawing, wherein
Fig. 1 shows an embodiment of a sod laying device according to the invention in perspective; and
Fig. 2. is a side view of the embodiment shown in fig. 1.

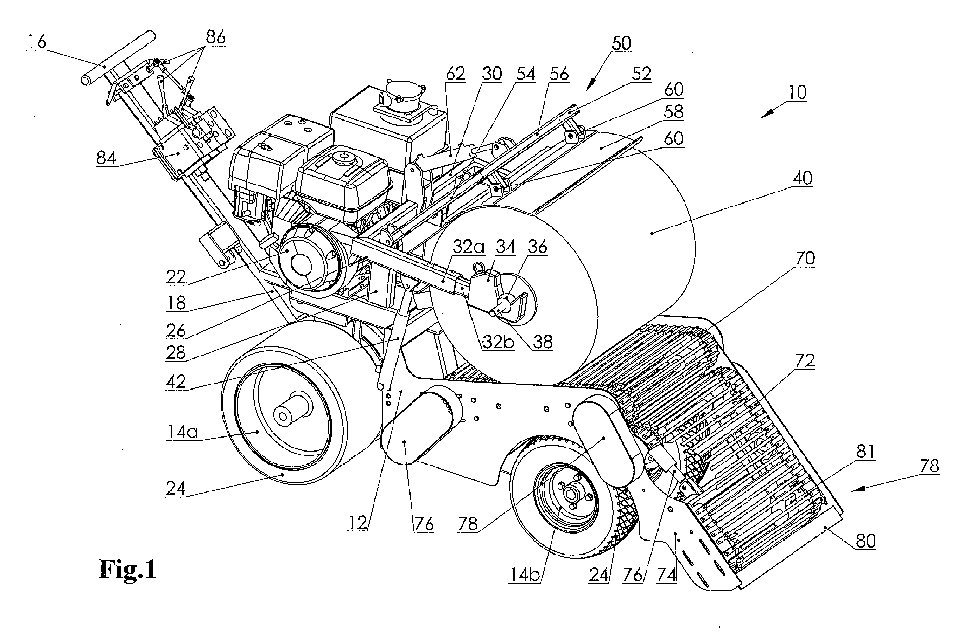

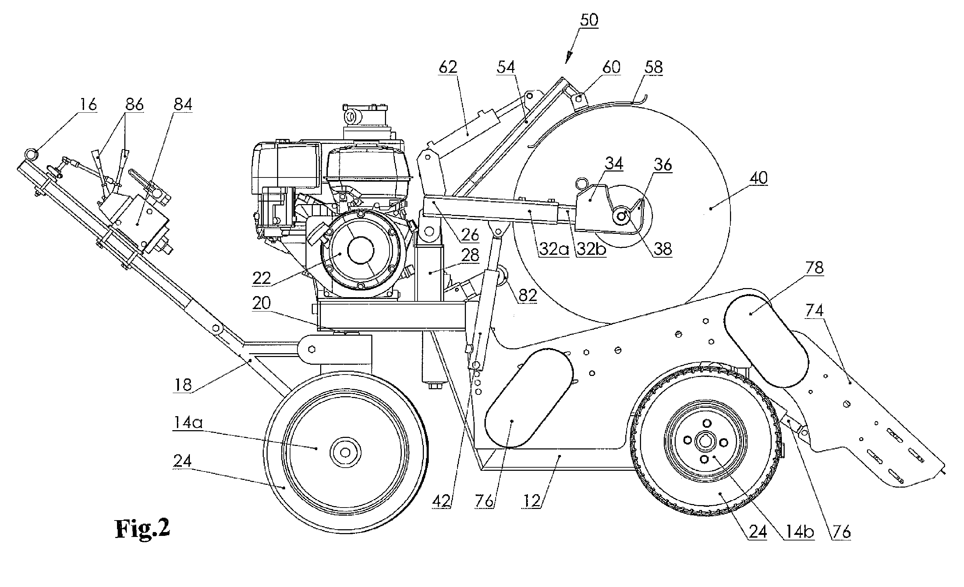

In figs. 1 and 2 an embodiment of a sod laying device according to the invention is indicated in its entirety by reference numeral 10. The device 10 comprises a main frame 12. Wheels 14 are mounted on the main frame 12 by means of shafts 16. The wheels 14 are arranged within the width of the main frame 12, corresponding essentially to the width of the sod rolls used. For example sod rolls having a width of 60 centimetres can be used in a device according to the invention having a width of 100 centimetres or even smaller. One pair of the wheels is a pair of steering wheels 14a, which can be steered using a steering mechanism 16. The steering wheels 14a are mounted to a steering subframe 18, which is rotatably mounted to the main frame 12 by means of a vertical rotation shaft 20. An engine 22 drives a hydromotor, which drives the other pair 14b of the wheels. The wheels have wide tyres 24 in order to distribute the weight of the device over a large ground contacting area thereby stabilising the device and reducing the risks of tracks being formed in the surface upon movement, in particular when loaded. Due to the compact design the device according to the invention can pass through small entrances and can be used in small areas because of its manoeuvrability.

A carrying frame 26 for carrying a sod roll is mounted on upstanding legs 28 of the main frame 12. The carrying frame 26 comprises a cross-bar 30 and carrying arms 32 fixed to the cross-bar 30 and extending in the longitudinal direction at both longitudinal sides of the device 10. Each carrying arm 32 has a take up element 34 having a recessed portion 36 at the top. Each take up element 34 carries one end of a shaft 38 carrying a sod roll 40 in such a way that rotation of the roll 40 is allowed in clockwise and counter-clockwise direction during winding or unwinding respectively. In this embodiment each carrying arm 32 comprises two parts 32a and 32b respectively. The distal part 32b having the take up element 34 is slideably arranged in the proximal 32a allowing adjusting the length of the carrying arms 32, if needed. The carrying frame 26 is hingedly mounted about a horizontal hinge axis. A piston cylinder assembly 42, preferably a hydraulic one, is connected between the main frame 12 and a carrying arm 32 allowing lifting or lowering of the carrying frame 26.

A pressure exerting element for effecting a controlled pressure on the roll 40 is indicated by numeral 50. In the embodiment shown the pressure exerting element 50 comprises a braking subframe 52, of which the arms 54 are hingedly mounted at one end thereof at the top of the upstanding legs 28. At the other end the arms 54 are connected to each other by a cross-bar 56. A braking plate 58 having a curved shape preferably corresponding to a part of the outer circumference of a sod roll 40, e.g. in the range of an arc section of 50-90 degrees is connected to the braking subframe 52, such that the braking plate 58 can freely rotate about horizontal axis 60 with respect to the subframe 52. The braking subframe 52 itself can be rotated about a horizontal axis by means of a piston cylinder assembly 62, preferably a hydraulic one, connected to the cross-bar 30 of the carrying frame 26 and the cross-bar 56 of the braking subframe 52.

A first endless conveyor 70, in this embodiment a sieve belt allowing soil or the like becoming detached from the bottom side of the sod roll to pass between the belt rods, is mounted in the main frame 12. A second conveyor 72, likewise an endless sieve belt, is mounted in a conveyor subframe 74 that is hingedly connected to the main frame 12. A (hydro)motor 76 having a sprocket wheel (not shown) drives the first conveyor 70, which is connected to the second conveyor 72 via a chain transfer (not visible) protected by chain guard 78. The conveyor subframe 74 can be raised and lowered by means of an additional lifting means, in this embodiment a (preferably hydraulic) piston cylinder assembly 76, mounted between the main frame 12 and the conveyor subframe 74 below the second conveyor 72. At the discharge end 78 of the second conveyor 72 a guiding plate 80 is attached downstream of the second conveyor preventing a sod section being laid to turn around the idle roll 81. The guiding plate 80 also makes it easy to take up web material from the ground, e.g. if repositioning is desired.

In the embodiment as shown, a guiding roll 82 freely rotatably mounted to the main frame 12 for guiding a portion of the sod roll being unwinded or winded is positioned at a height between the carrying frame 26 and the sod contacting position of the first conveyor 70. It is also contemplated that several non-driven guiding rolls or a non-driven endless conveyor belt can be used as guiding means.

A control unit 84 is arranged on the steering subframe 18 for independently controlling the various drive means 22 and 76 of the conveyor 70 and of the wheels 14b respectively. Also the pressure exerted by the pressure exerting element 50 on the outer periphery of the roll 40 can be adjusted by means of the piston cylinder assembly 62. In view thereof operating handles 86 for operating the various piston cylinder assemblies are provided at the control unit 84.

The device 10 is preferably operated as follows. A roll 40 of coiled sod web (soil portion outside) is mounted on a shaft 38. The height of the carrying frame 26 is adjusted by operating the piston cylinder assemblies 42 so that the distance between the recessed portion 36 and the first conveyor 70 is larger than the radius of the sod roll 40. Then the roll 40 is loaded on the carrying frame 26, usually by means of an auxiliary lifting device. The leading end of the sod web is uncoiled to such an extent that it contacts the first conveyor over a sufficient length. Subsequently these piston cylinder assemblies 42 can be inactivated allowing lowering the carrying subframe 26 due to the weight of the roll 40 and the carrying subframe 26 until the sod roll 40 contacts leading end on the first conveyor 70. The pressure exerting element 50 is lowered in order to contact the sod roll 40 at a predetermined pressure.

Actuation of the motor 76 will start the conveyors 70 and 72 to move thereby forwarding the leading end of the sod web to the discharge position of the second conveyor 72, while unwinding the roll 40. Once the leading end is at this discharge position the drive means (engine 22) is actuated so that the device 10 is driven over the surface at a predetermined speed (usually in the order of several kilometres per hour). During movement the sod web is laid on the surface due to the movement of the conveyors. If necessary the movement direction of the device 10 and the conveyors 70, 72 can be reversed in order to wind the web up (again), e.g. if an old sporting pitch is to be replaced by a new one, or if a correction of a freshly laid sod web has to be made. During movement the carrying subframe 26 will lower according to the diminishing radius of the sod roll 40. The braking subframe 52 also follows this movement while keeping the pressure exerted on the sod roll 40 within a predetermined range. Due to the braking action exerted by braking plate and due to the supporting action of the conveyors unwinding (or winding) can be carried out in a controlled manner preventing the occurrence of irregularities such as bulges, over-tensioned areas in the sod web as laid. Thus the quality of the sod web as laid is uniform. Also the influences of variations between sod rolls and between sections of one and the same roll in characteristics like thickness, moisture content, density, oval shaped instead of circular are counteracted by the controlled way of laying web material using the device according to the invention.

Furthermore the speed of the conveyors can be adjusted independently from the movement speed of the device. This offers flexibility in laying web material, in particular sod. E.g. if the speed of the conveyor is set slightly higher than that of the device itself, as a result the sod web will be compressed somewhat in the lengthwise direction thereof, which may be beneficial if denser grass is desired. Using an opposite setting some kind of tensioning and lengthening may be brought about in the sod web as laid.

## Claims

1. Device (10) for laying web material on a surface from a roll (40) of coiled web material, in particular for laying sod on the ground from a sod roll, or for removing such web material from a surface, comprising a mobile main frame (12), at least a carrying subframe (26) mounted on the main frame (12), the carrying subframe (26) being provided with carrying means (34) for carrying a roll of coiled web material allowing rotation of the roll about its longitudinal axis, a conveyor means (70, 72) for conveying a section of the web material during unwinding thereof from a first contacting position to a second discharging position or vice versa, at least a drive means (22, 76) for moving the mobile frame on the surface and for driving the conveyor means, and a pressure exerting element (50) for exerting a pressure on the coiled web material during unwinding or winding.

2. Device according to claim 1, wherein the pressure exerting element (50) comprises a braking subframe (52) having a braking plate (58), which braking subframe (52) is hingedly mounted on the main frame (12).

3. Device according to any one of the preceding claims, wherein the pressure exerting element (50) is hingedly connected to the main frame (12) by a piston cylinder assembly (62).

4. Device according to any one of the preceding claims, wherein the braking plate (58) has a curved shape contacting a part of the coiled web material.

5. Device according to any one of the preceding claims, wherein the carrying subframe (26) is hingedly mounted to the main frame (12).

6. Device according to any one of the preceding claims, wherein the carrying subframe (26) comprises carrying arms (32) with lifting means (42) for lifting and lowering the carrying arms with respect to the main frame.

7. Device according to any one of the preceding claims, wherein the carrying subframe (26) has carrying arms (32a; 32b) extendable in the longitudinal direction of the device.

8. Device according to any one of the preceding claims, wherein the conveyor means comprises a first conveyor (70) mounted in the main frame (12) and a second conveyor (72) mounted in a secondary conveyor frame (74) hingedly connected to the main frame (12) at the end of the first conveyor (70).

9. Device according to claim 8, wherein the first and second conveyors (70, 72) have a common drive means (76).

10. Device according to any one of the preceding claims, wherein the conveyor means (70, 72) and the mobile frame have independently controllable drive means (22, 76).

11. Method of laying web material on a surface, in particular using a device (10) according to any one of the preceding claims, wherein the speed of the conveyor means is set independently from the speed of the device.
